# EUROPEAN PATENT APPLICATION

(11) **EP 4 760 122 A1**
(43) Date of publication of application: **17.06.2026**
(21) Application number: 25219121.8
(22) Date of filing: 27.11.2025
(51) Int. Cl.: F16D 7/02

(54) **A CLUTCH ASSEMBLY, A REAR VIEW DEVICE, A VEHICLE, AND A METHOD OF MANUFACTURING THEREOF**

(30) Priority: 12.12.2024 DE 102024137450
(71) Applicant: Motherson Innovations Company Ltd., London, E14 5HU (GB)
(72) Inventor: LEE, Youngmin, 14523 Bucheon-si Gyeonggi-do, KP (KR); WOO, Heesung, 14523 Bucheon-si Gyeonggi-do, KP (KR); PARK, Dong Myeong, 14523 Bucheon-si Gyeonggi-do, KP (KR); YUN, Seungtae, 14523 Bucheon-si Gyeonggi-do, KP (KR); YU, Il-Sung, 14523 Bucheon-si Gyeonggi-do, KP (KR)
(74) Representative: Isarpatent

(57) **Abstract**

A clutch assembly (100) for a rear view device (302) of a vehicle comprising, a shaft (102) having a first end (104), a second end (106), and a middle portion (108) between the first end and the second end. The first end of the shaft comprises a first clutch gear (110), the second end of the shaft comprises a pinion gear (112). The middle portion of the shaft comprises a flange, a groove, a guide portion, and a shaft portion. A second clutch gear (122) comprises a cylindrical void and circumferentially surrounds the middle portion of the shaft. The cylindrical void of the second clutch gear comprises first interior wall portion, a second interior wall portion, and a projection between the first interior wall portion and the second interior wall portion. Wherein the second clutch gear (122) contacts the middle portion of the shaft at a first friction area (132), a second friction area (134), and a third friction area (136).

## Description

The present disclosure relates generally to a clutch assembly for a rear view device of a vehicle and a method of manufacturing the clutch assembly.

Currently, to enable a driver to easily observe traffic situations around the side and the rear of a vehicle, rear view mirrors are mounted to both the left and right side of a vehicle and in front of front doors of the vehicle. A rear view assembly includes a housing, a rear view mirror located at a side of the housing and angularly adjustable and configured to adjust an angle of the rear view mirror. The rear view mirror and housing generally include a power-actuated unit driven by a power source to adjust the angle of the rear view mirror, and a manual-actuator unit to manually adjust the angle of the rear view mirror. At present times, the rear view mirror and housing generally include a clutch assembly which can be driven by a power source and a manual mode to adjust the angle of the rear view mirror.

US 9,902,234 B2 discloses such a clutch assembly. The clutch assembly in US 9,902,234 B2 is connected between a gear set connected to a driving motor of an actuator mechanism of a wing mirror and a ring gear connected to an adapter, and includes a clutch gear, and a left-handed and right-handed clutch springs. The clutch gear defines a groove in an inner circumference. The pinion gear includes a gear portion meshing with the ring gear, and a clutch holding surface integrally formed with the gear pinion.

However, the above-mentioned clutch structure adopts an excessive amount of surface friction and easily wears out because of continuous or prolonged use, thereby reducing a service life.

Against this background, the objective of the present disclosure is to overcome the short comings of the prior art by the clutch assembly placing the friction and stress over a greater area and at more points of contact to increase service life of the clutch assembly.

In one aspect, the present disclosure provides a clutch assembly for use in an actuator of a rear view device of a vehicle.

In one example, a clutch assembly for a rear view device of a vehicle which may comprise, a shaft having a first end, a second end, and a middle portion between the first end and the second end. The clutch assembly may further comprise a second clutch gear having a cylindrical void and at least partially circumferentially surrounding the middle portion of the shaft. The second clutch gear may comprise a rotating friction portion which may have at least three friction areas. The three friction areas may be separated from each other by a guide portion and a clutch spring, and the second clutch gear may be arranged and configured to contact the middle portion of the shaft at the at least three friction areas. Having at least three friction areas distributes the friction and reduces the wear experienced by the shaft and the second clutch gear. This configuration may provide a longer life and better performance of the clutch assembly.

In another example, the middle portion of the shaft may further comprise a flange, a groove, the guide portion, and a shaft portion, and the cylindrical void of the second clutch gear may further comprise a first interior wall portion, a second interior wall portion, and a projection between the first interior wall portion and the second interior wall portion. The second clutch gear may contact the middle portion of the shaft at a first friction area, a second friction area, and a third friction area. Having multiple friction areas distributes the friction over a larger surface area. The larger surface area extends the life of the clutch assembly.

In yet another example, the first friction area may be between the shaft portion of the middle portion of the shaft and the first interior wall portion of the cylindrical void of the second clutch gear. The second friction area may be between the groove of the middle portion of the shaft and the projection of the cylindrical void of the second clutch gear. The third friction area may be between the flange of the middle portion of the shaft and the second interior wall portion of the cylindrical void of the second clutch gear. Having at least three different friction areas spaced out along the shaft may more evenly distribute the friction area which may increase the life of the shaft and second clutch gear of the clutch assembly.

In yet another example, the clutch assembly may further comprise a clutch spring circumferentially surrounding the middle portion of the shaft and having a first spring end and a second spring end. The first spring end engages the projection of the cylindrical void of the second clutch gear. The second spring end engages the flange of the middle portion of the shaft. The clutch spring comprises a ring spring. The clutch spring may tighten a pinion gear so that the required frictional force can be generated inside the pinion gear and the clutch spring.

In a further example, the clutch spring is located between the second friction area and the third friction area. The clutch spring separating the second and third friction area spreads the at least three friction areas out in the axial direction of the shaft.

In an example, the projection of the cylindrical void of the second clutch gear comprises a chamfered portion and the chamfered portion may enable sliding over the guide portion in an axial direction to make assembly efficient.

In another example, the second clutch gear is configured from a plastic material comprising polyamide 66 (nylon 66) and carbon fiber. This may allow the projection to have elasticity properties to make assembly more efficient. The clutch spring is configured from a metal material, comprising steel. This may be to withstand the required tightness necessary to withstand the frictional force needed to be generated inside the pinion gear. The shaft is configured from a plastic material comprising polyamide 66 (nylon 66), polyphthalamide, and glass fibers. This may dampen vibrational noises that may be produced when friction occurs between the second clutch gear and the shaft as the clutch assembly rotates. In a further example, the projection may comprise a hook-like shape disposed in an axial direction towards a first clutch gear of the shaft and configured to be in a rotatably fixed position with the guide portion of the middle portion of the shaft. The projection may be rotatably fixed to the guide portion may keep the clutch assembly together by overcoming the axial force of the spring.

In an example, a rear view device comprising the clutch assembly of any of the present disclosure. Also, a vehicle comprising the rear view device as described in this disclosure.

In another example, method of manufacturing the clutch assembly configured according to any of the disclosure.

The foregoing summary, as well as the following detailed description, will be better understood when read in conjunction with the appended drawings. For the purpose of illustration, certain examples of the present description are shown in the drawings. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number.
Fig. 1 is an embodiment of a rear view device according to the present disclosure in which an actuator mechanism according to the present disclosure is mounted to a vehicle;
Fig. 2 is a perspective view of the rear view device in which a clutch assembly is mounted in the actuator mechanism within the rear view device;
Fig. 3 is a view illustrating the actuator mechanism according to various examples of the present disclosure;
Fig. 4A is a perspective view illustration of the clutch assembly;
Fig. 4B is a perspective view illustration of the clutch assembly;
Fig. 5 is a perspective exploded view of the clutch assembly;
Fig. 6A is a cross-sectional view of the clutch assembly in a disengaged position;
Fig. 6B is a magnified cross-sectional view of the clutch assembly of circle B in Fig. 6A;
Fig. 7A is a cross-sectional view of the clutch assembly in an engaged position; and
Fig. 7B is a magnified cross-sectional view of the clutch assembly of circle A in Fig. 7A.

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. Also, descriptions of well-known functions and constructions may be omitted for increased clarity and conciseness.

It is to be understood that the phraseology and terminology employed herein are for the purpose of description and should not be regarded as limiting. For example, the use of a singular term, such as, "a" is not intended as limiting of the number of items. Also, the use of relational terms, such as but not limited to, "top," "bottom," "left," "right," "upper," "lower," "down," "up," "side," are used in the description for clarity and are not intended to limit the scope of the disclosure or the appended claims. Further, it should be understood that any one of the features can be used separately or in combination with other features. Other systems, methods, features, and advantages of the disclosure will be or become apparent to one with skill in the art upon examination of the detailed description. It is intended that all such additional systems, methods, features, and advantages be included within this description, be within the scope of the present disclosure, and be protected by the accompanying claims.

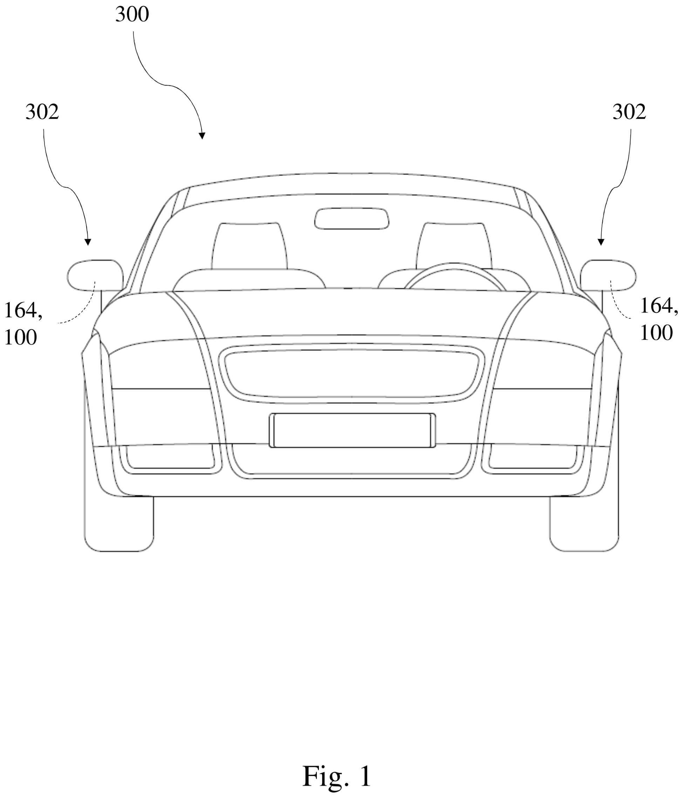

Fig. 1 shows a front view of a vehicle 300 which may comprise at least one rear view device 302. The at least one rear view device 302 may comprise an actuator 164 with a clutch assembly 100 being configured to be operable in the actuator 164. As shown in Fig. 1, the vehicle has two rear view devices 302 which are mounted on the outside of the vehicle 300 allowing a driver to see behind and to the sides of the vehicle 300. Such vehicles may be a passenger car, a truck, a freight truck, and other vehicles. It may be common for the rear view device 302 to be secured to the vehicle 300 on both the left and right side of the vehicle 300.

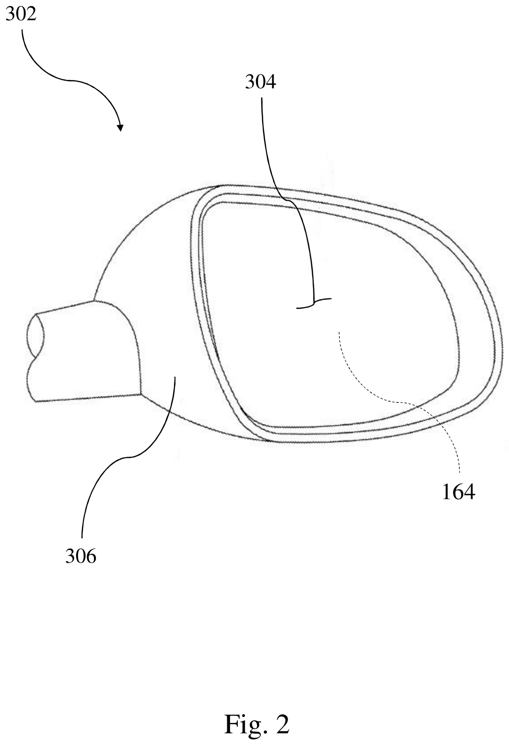

Fig. 2 shows a perspective view of the rear view device 302. The rear view device 302 comprises a housing 306 and a reflective element 304. The rear view device 302 may be configured to be secured to the vehicle 300 (see Fig. 1). The actuator 164 may be configured to move the reflective element 304 in an upward, downward, left, and right directions to allow the driver to have an optimal field of view behind and to the sides of the vehicle 300.

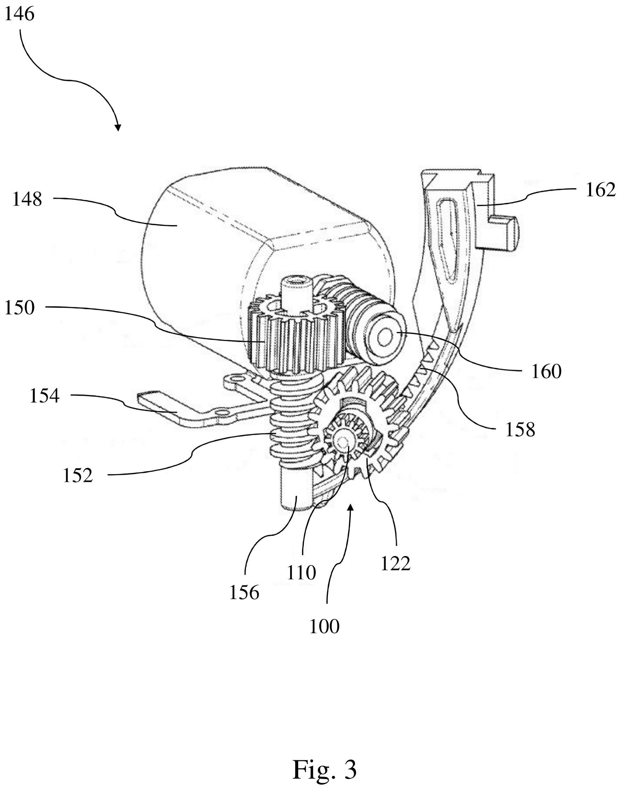

Fig. 3 shows a driving mechanism 146 according to various examples of the present disclosure on a first side. The driving mechanism 146 may be used for adjusting the rear view device 302, specifically the reflective element 304. The driving mechanism 146 may comprise at least some of a first driving motor 148, a first transmission gear 156, a first clutch gear 110, and a first drive gear 162. Stated differently, the driving mechanism 146 may be said to comprise a first driving mechanism 146 (a driving mechanism associated with a first driving motor 148) and a second driving mechanism (not shown) (e.g., the driving mechanism associated with a second driving motor (not shown)).

According to various embodiments of the present disclosure, the first driving motor 148 may comprise a first terminal 154 and a first output gear 160. The first terminal 154 may be electrically connected to the outside of the first driving motor 148 (e.g., internal power of the vehicle 300) to receive power for operating the first driving motor 148. In an embodiment of the present disclosure, the first terminal 154 may be connected to another terminal of a circuit board arranged in the housing 306 (see housing of Fig. 2) or may be connected to another terminal outside of the housing. The first output gear 160 may transmit the power of the first driving motor 148 to other components.

According to various embodiments of the present disclosure, the first transmission gear 156 may be connected to the first output gear 160. In addition, the first transmission gear 156 may be connected to a second clutch gear 122. In other words, the first transmission gear 156 may connect the first output gear 160 and the second clutch gear 122. In an embodiment of the present disclosure, the first transmission gear 156 may comprise a first transmission part 150 and a second transmission part 152 for connecting with the second clutch gear 122. In an embodiment of the present disclosure, the first transmission part 150 and the second transmission part 152 may transmit power in different directions or may transmit power in the same direction. For example, the first transmission part 150 may be provided as a spur gear or a helical gear, and the second transmission part 152 may be provided as a worm gear.

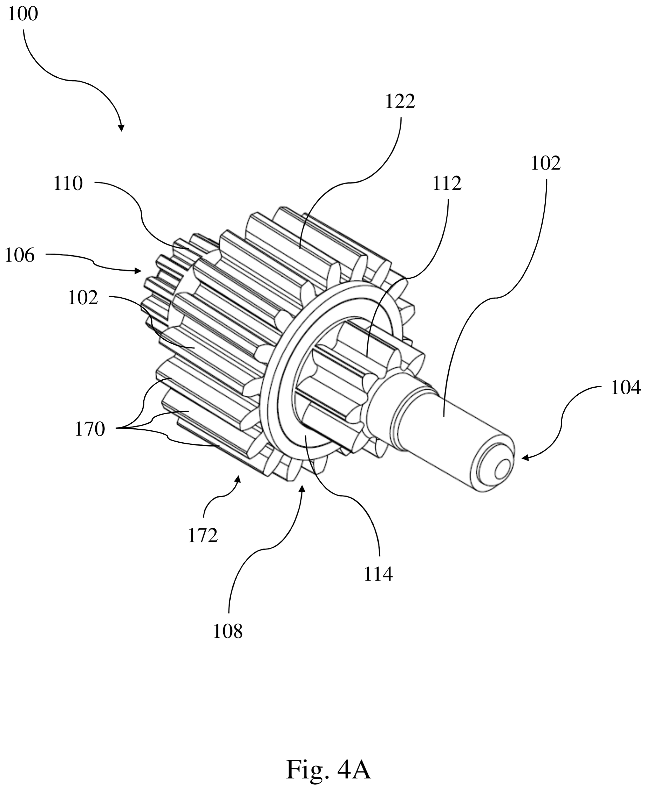

According to various embodiments of the present disclosure, the second clutch gear 122 may be configured for receiving power from the first transmission gear 156 and a pinion gear 112 (see Figs. 4A-6A) for engaging with at least a portion of the first drive gear 162. In one embodiment of the present disclosure, the first clutch gear 110 may be provided as a spur gear or a helical gear. In addition, the pinion gear 112 may engage the first drive gear 162. In an embodiment of the present disclosure, the first clutch gear 110 and the pinion gear 112 may share the same axis but have different diameters. For example, the pinion gear 112 may have a diameter smaller than that of the first clutch gear 110.

According to various embodiments of the present disclosure, the first drive gear 162 may comprise a first driving region 158 to be engaged with the pinion gear 112. In an embodiment of the present disclosure, the first driving region 158 may be provided as a rack gear. In addition, the first drive gear 162 may have a smoothly curved shape. For example, the first drive gear 162 may be arc shaped. Since the first drive gear 162 has an arc shape, the first drive gear 162 may smoothly perform a revolve motion based on a central axis of the arc in correspondence with the operation of the pinion gear 112. In addition, the first drive gear 162 may move along an inner surface of a lower case (not shown). To this end, the shape of the outer surface of the first drive gear 162 and the shape of the inner surface of the lower case (not shown) may correspond to each other.

The driving mechanism 146 is located within the housing 306 and behind the reflective element 304 of the rear view device 302. There may also be two driving mechanisms 146 within the housing 306 of the rear view device 302 to form a pair of driving mechanisms 146. One driving mechanism 146 may be configured to rotate the reflective element 304 in a first axis while the other driving mechanism may be configured to rotate the reflective element 304 in a second axis. The fist axis may be in a substantially vertical direction allowing the reflective element 304 to be tilted or rotated up and down. While the second axis may be in a substantially horizontal direction allowing the reflective element 304 to be tilted or rotated left and right.

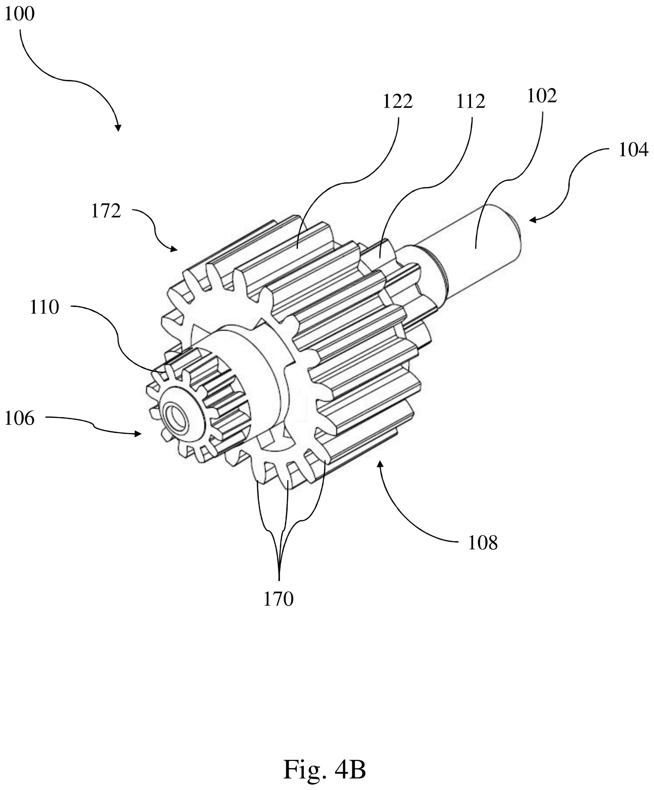

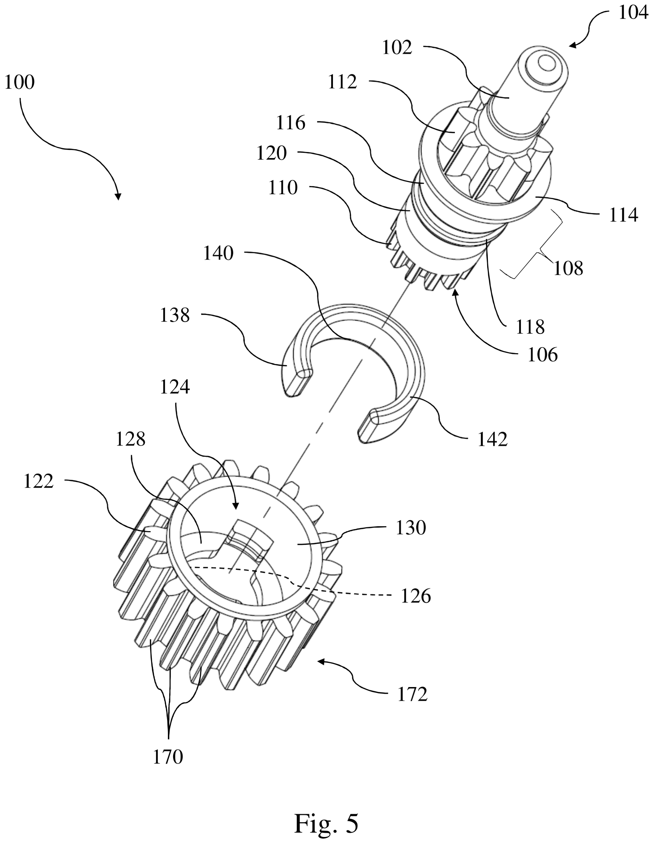

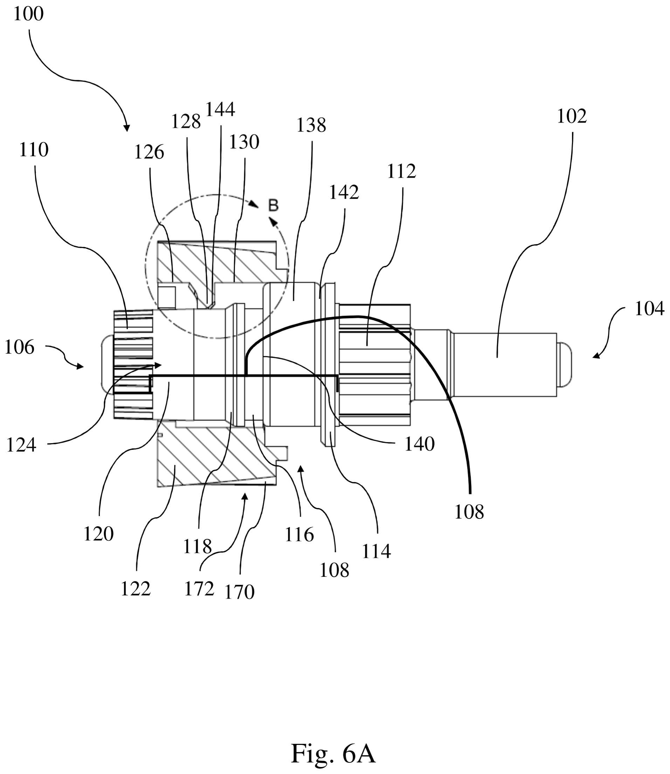

The Fig. 4A and 4B show opposing perspective views of the clutch assembly 100, while Fig.5 shows an exploded view of the clutch assembly 100. The clutch assembly 100 may be configured for the rear view device 302 of the vehicle 300. In an embodiment of the present disclosure, the clutch assembly 100 may comprise a shaft 102 and the shaft 102 having a first end 104, a second end 106 and a middle portion 108 wherein the middle portion 108 is between the first end 104 and the second end 106. The first end of the shaft 102 may comprise the first clutch gear 110 and the second end of the shaft may comprise the pinion gear 112. The clutch assembly 100 comprising the first clutch gear 110, the second clutch gear 122 and the pinion gear 112 arranged about the shaft 102. Additionally, the middle portion 108 of the shaft 102 may comprise a flange 114, a groove 116, a guide portion 118, and a shaft portion 120. The clutch assembly 100 further comprises the second clutch gear 122 having a cylindrical void 124 that circumferentially surrounds the middle portion 108 of the shaft 102 (see Figs. 6A-7B). The cylindrical void 124 of the second clutch gear 122 may comprise a first interior wall portion 126, a second interior wall portion 130, and a projection 128 between the first and second interior wall portions 126, 130.

The clutch assembly 100 may be configured to have at least the shaft 102, a clutch spring 138 and the second clutch gear 122. In an embodiment, the second clutch gear 122 may have the cylindrical void 124. Said another way, the second clutch gear 122 may be ring shaped wherein the interior of the ring is configured to surround the shaft 102 in a circumferential manner.

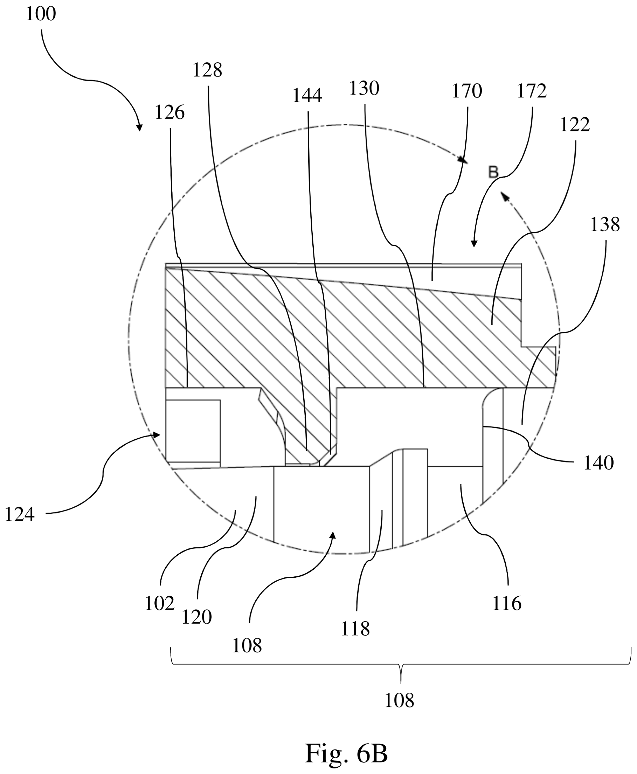

Fig. 6A shows a cross-sectional view of the clutch assembly 100 in a disengaged position. Fig. 6B shows a magnified view of circle B of the clutch assembly as shown in Fig. 6A. The disengaged position may show the clutch assembly 100 in a process of assembly. In one embodiment of the present disclosure, Figs. 6A and 6B show the clutch assembly 100 may comprise the second clutch gear 122 having a plurality of teeth 170 on an exterior side 172 that may be opposite the cylindrical void 124. In one embodiment of the present disclosure, the clutch spring 138 circumferentially surrounds the middle portion 108 of the shaft 102 and is positioned between the flange 114 and the groove 116.

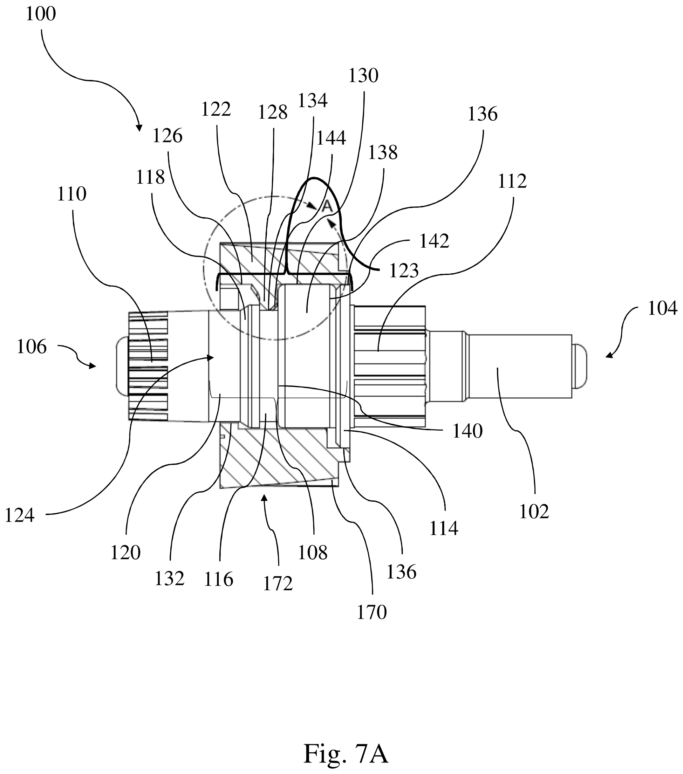

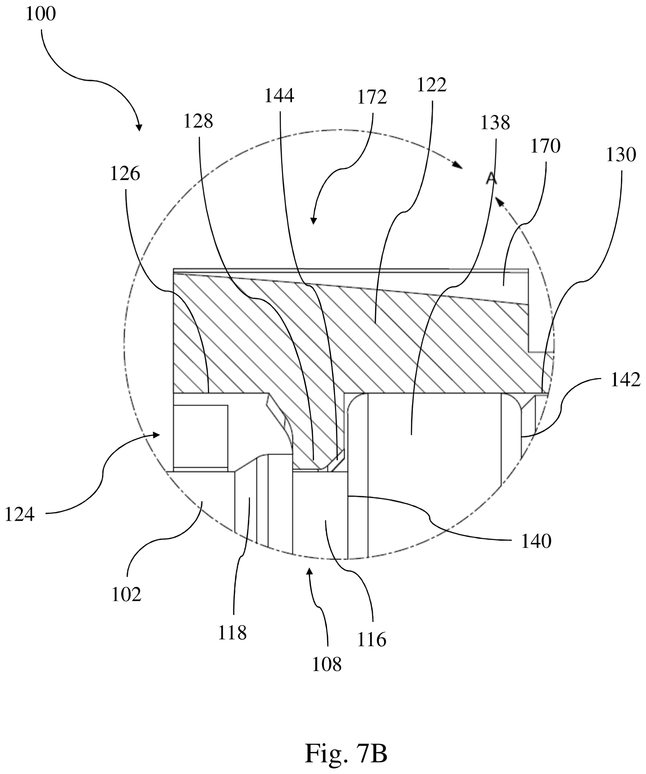

Fig. 6B is a magnified cross-sectional view of the clutch assembly 100 of circle B in Fig. 6A which further illustrates the clutch assembly 100 in the disengaged position. In an embodiment of the present disclosure, the projection 128 of the cylindrical void 124 of the second clutch gear 122 contacts the shaft portion 120 of the shaft 102. As shown in Figs. 7A, 7B the projection has a chamfered portion 144 configured to contact the guide portion 118 of the shaft 102 as the clutch assembly 100 moves from the disengaged position to an engaged position (shown in Figs. 6A, 6B - 7A, 7B). The projection 128 is resilient in that when contacting the guide portion 118 and moving in an axial direction to the groove 116, the projection 128 maintains its shape and strength. Furthermore, the projection 128 comprises a hook-like shape disposed in the axial direction towards the first clutch gear 110 of the shaft 102 and configured to be in a rotatably fixed position with the guide portion 118 of the middle portion 108 of the shaft 102.

Fig. 7A shows a cross-sectional view of the clutch assembly 100 in the engaged position. Fig. 7B shows a magnified view of circle A of the clutch assembly as shown in Fig. 7A. In an embodiment, the engaged position may be the position the clutch assembly 100 is in when being configured to rotationally operate the movement of the reflective element 304 of the rear view device 302 of the vehicle 300 (see Figs. 1, 2).

In an embodiment of the present disclosure, as shown in Fig. 7A the second clutch gear 122 may comprise a rotating friction portion 123 comprising at least three friction areas 132, 134, 136 separated by a guide portion 118 and a clutch spring 138 and the second clutch gear 122 may be arranged and configured to contact the middle portion 108 of the shaft 102 at the at least three friction areas 132, 134, 136.

In an embodiment of the present disclosure, the clutch assembly 100 for the rear view device 302 of the vehicle 300 may have the shaft 102 with the first end 104 and the second end 106 with the middle portion 108 between the first end 104 and the second end 106. Further, the first end of the shaft 102 may have the first clutch gear 110 and the second end 106 of the shaft 102 may have the pinion gear 112. The middle portion 108 of the shaft 102 having the flange 114, the groove 116, the guide portion 118 and the shaft portion 120. The second clutch gear 122 may have the cylindrical void 124 that circumferentially surrounds the middle portion 108 of the shaft 102. The cylindrical void 124 of the second clutch gear 122 may have the first interior wall portion 126, the second interior wall portion 130 and the projection 128 therebetween. The second clutch gear 122 may contact the middle portion 108 of the shaft 102 at a first friction area 132, a second friction area 134, and a third friction area 136.

In an embodiment of the present disclosure shown in Figs. 7A and 7B, the clutch assembly 100 may have the first friction area 132 is between the shaft portion 120 of the middle portion 108 of the shaft 102 and the first interior wall portion 126 of the cylindrical void 124 of the second clutch gear 122. Additionally, the second friction area 143 may be between the groove 116 of the middle portion 108 of the shaft 102 and the projection 128 of the cylindrical void 124 of the second clutch gear 122. Furthermore, the third friction area 136 may be between the flange 114 of the middle portion 108 of the shaft 102 and the second interior wall portion 130 of the cylindrical void 124 of the second clutch gear 122. Three friction areas are discussed in the present disclosure, however, it is also contemplated that more than three friction areas are possible. It is understood that the more friction areas that are present, then the force exerted on the clutch assembly 100 is dispersed over more surface area which in turn prolongs the life and functionality of the clutch assembly 100.

Also shown in Figs. 7A and 7B, the clutch assembly 100 may also have the clutch spring 138 circumferentially surrounding the middle portion 108 of the shaft 102 and having a first spring end 140 and a second spring end 142. The first spring end 140 may engage the projection 128 in the axial direction of the cylindrical void 124 of the second clutch gear 122. The second spring end 142 may engage the flange 114 of the middle portion 108 of the shaft 102. In an embodiment of the present disclosure, the clutch spring 138 may be located between the second friction area 143 and the third friction area 136. The clutch spring 138 may be a ring spring or may be any type of spring to achieve the required tension between the projection 128 and the flange 114. In yet another embodiment of the present disclosure, the projection 128 of the cylindrical void 124 of the second clutch gear 122 may have the chamfer portion 144. The chamfer portion 144 assists in the assembly of the clutch assembly 100 by allowing the projection 128 to slide over the guide portion 118 and axially move to the groove 116 without damaging any components.

In a further embodiment of the present disclosure, the second clutch gear 122 is configured from a plastic material comprising polyamide 66 (nylon 66) and carbon fiber. This may allow the projection to have elasticity properties to make assembly more efficient. The clutch spring 138 is configured from a metal material, comprising steel. This may be to withstand the required tightness necessary to withstand the frictional force needed to be generated inside the pinion gear 112. The shaft 102 is configured from a plastic material comprising polyamide 66 (nylon 66), polyphthalamide, and glass fibers. This may dampen vibrational noises that may be produced when friction occurs between the second clutch gear 122 and the shaft 102 as the clutch assembly 100 rotates. In another embodiment, the rear view device 302 comprises the clutch assembly 100 as described in the present disclosure. Also, the vehicle 300 comprising the rear view device 302 having the clutch assembly 100 as described in the present disclosure.

A method of manufacturing the clutch assembly 100 configured according to any of the present disclosure. One possible method of manufacturing the clutch assembly 100 may be seen in the Figures going from a disengaged position in Figs. 6A, 6B to an engaged position as shown in Figs. 7A, 7B.

Unless otherwise indicated, all numbers expressing feature sizes, amounts, and physical properties used in the specification and claims are to be understood as being modified by the term "about". Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

Furthermore, the features of the disclosure disclosed in this specification, the claims and the drawings may be employed both individually and in any possible combination for practicing the disclosure in its various exemplary embodiments. In particular, all claim feature combinations, irrespective of the claim dependencies, are covered with this application.

### LIST OF NUMBERS

- 100: clutch assembly
- 102: shaft
- 104: first end
- 106: second end
- 108: middle portion
- 110: first clutch gear
- 112: pinion gear
- 114: flange
- 116: groove
- 118: guide portion
- 120: shaft portion
- 122: clutch gear
- 124: cylindrical void
- 126: first interior wall portion
- 128: projection
- 130: interior wall portion
- 132: first friction area
- 134: second friction area
- 136: third friction area
- 138: clutch spring
- 140: first spring end
- 142: second spring end
- 144: chamfer portion
- 146: driving mechanism
- 148: first driving motor
- 150: first transmission part
- 152: second transmission part
- 154: first terminal
- 156: first transmission gear
- 158: first driving region
- 160: first output gear
- 162: first drive gear
- 164: actuator
- 170: plurality of teeth
- 172: exterior side
- 300: vehicle
- 302: rear view device
- 304: rear view element
- 306: housing

## Claims

1. A clutch assembly (100) for a rear view device (302) of a vehicle (300), the clutch assembly (100) comprising:
a shaft (102) having a first end (104), a second end (106), and a middle portion (108) between the first end (104) and the second end (106);
a second clutch gear (122) comprises a cylindrical void (124) and at least partially circumferentially surrounding the middle portion (108) of the shaft (102), wherein the second clutch gear (122) is arranged and configured to contact the middle portion (108) of the shaft (102) at the at least three friction areas (132, 134, 136) on a rotating friction portion (123), wherein the at least three friction areas (132, 134, 136) are separated by a guide portion (118) and a clutch spring (138).

2. The clutch assembly of claim 1, further comprising: the middle portion (108) of the shaft (102) comprises a flange (114), a groove (116), a guide portion (118), and a shaft portion (120) and the cylindrical void (124) of the second clutch gear (122) comprises a first interior wall portion (126), a second interior wall portion (130); and a projection (128) between the first interior wall portion (126) and the second interior wall portion (130); and the second clutch gear (122) contacts the middle portion (108) of the shaft (102) at a first friction area (132), a second friction area (134), and a third friction area (136).

3. The clutch assembly according to any of the preceding claims, wherein,
the first friction area (132) is between the shaft portion (120) of the middle portion (108) of the shaft (102) and the first interior wall portion (126) of the cylindrical void (124) of the second clutch gear (122);
the second friction area (134) is between the groove (116) of the middle portion (108) of the shaft (102) and the projection (128) of the cylindrical void (124) of the second clutch gear (122); and
the third friction area (136) is between the flange (114) of the middle portion (108) of the shaft (102) and the second interior wall portion (130) of the cylindrical void (124) of the second clutch gear (122).

4. The clutch assembly according to any of the claims 2 or 3, further comprising the clutch spring (138) circumferentially surrounding the middle portion (108) of the shaft (102) and having a first spring end (142) and a second spring end (144), wherein the first spring end (142) engages the projection (128) of the cylindrical void (124) of the second clutch gear (122) and the second spring end (144) engages the flange (114) of the middle portion (108) of the shaft (102).

5. The clutch assembly according to any of the claims 2, 3, or 4, wherein the clutch spring (138) is located between the second friction area (134) and the third friction area (136).

6. The clutch assembly according to any of the preceding claims, wherein the clutch spring (138) is a ring spring.

7. The clutch assembly (100) according to any of the preceding claims, wherein the projection (128) of the cylindrical void (124) of the second clutch gear (122) comprises a chamfered portion (144) to enable sliding over the guide portion (118) in an axial direction.

8. The clutch assembly according to any of the preceding claims, wherein:
the second clutch gear (122) is configured from a plastic material comprising polyamide 66 (nylon 66) and carbon fiber, and/or;
the clutch spring is configured from a metal material comprising steel, and/or;
the shaft is configured from a plastic material comprising polyamide 66 (nylon 66), polyphthalamide, and/or glass fibers.

9. The clutch assembly according to any of claims 2-8, wherein the projection (128) comprises a hook-like shape disposed in an axial direction towards a first clutch gear (110) of the shaft (102) and configured to be in a rotatably fixed position with the guide portion (118) of the middle portion (108) of the shaft (102).

10. A rear view device (302) comprising a clutch assembly (100) according to any of the preceding claims.

11. A vehicle (300) comprising a rear view device (302) according to claim 9.

12. A method of manufacturing the clutch assembly (100) configured according to any of the claims 1-9.
